# EUROPEAN PATENT SPECIFICATION

(11) **EP 4 722 840 B1**
(45) Date of publication and mention of the grant of the patent: **09.12.2026**
(21) Application number: 25204660.2
(22) Date of filing: 25.09.2025
(51) Int. Cl.: G05D 1/249, G05D 1/617, G05D 105/45, G05D 107/70, G05D 109/10, G05D 111/10

(54) **VEHICLE MANUFACTURING SYSTEM AND VEHICLE MANUFACTURING METHOD**
FAHRZEUGHERSTELLUNGSSYSTEM UND FAHRZEUGHERSTELLUNGSVERFAHREN
SYSTÈME DE FABRICATION DE VÉHICULE ET PROCÉDÉ DE FABRICATION DE VÉHICULE

(30) Priority: 07.10.2024 JP 2024176105
(43) Date of publication of application: 08.04.2026
(73) Proprietor: TOYOTA JIDOSHA KABUSHIKI KAISHA, Toyota-shi, Aichi-ken 471-8571 (JP)
(72) Inventor: IWAZAKI, Noritsugu, Toyota-shi, 471-8571 (JP); KANOU, Takeshi, Toyota-shi, 471-8571 (JP); INOUE, Go, Toyota-shi, 471-8571 (JP); OKAMOTO, Yuki, Toyota-shi, 471-8571 (JP); OKA, Yuhei, Toyota-shi, 471-8571 (JP); KAKUMA, Daisuke, Toyota-shi, 471-8571 (JP); CHIBA, Hiroya, Toyota-shi, 471-8571 (JP); OHARA, Kento, Toyota-shi, 471-8571 (JP)
(74) Representative: J A Kemp LLP

(56) References cited:
- US-A1- 2021 049 776
- US-A1- 20230 144 745
- US-A1- 20240 308 608

## Description

### BACKGROUND

The present disclosure relates to a vehicle manufacturing system and a vehicle manufacturing method.

Patent Literature 1 discloses a vehicle manufacturing system. A vehicle travels, by autonomous control or remote control, in a system for producing vehicles. US 2024/308608 A1, US 2021/049776 A1, and US 2023/144745 A1 are background art.

[Patent Literature 1] Published Japanese Translation of PCT International Publication for Patent Application, No. 2017-538619

### SUMMARY

In a vehicle manufacturing factory, a plurality of vehicles run autonomously along a transport path and are sequentially manufactured. Therefore, productivity can be improved. On the other hand, it is also desirable to control vehicles from the outside. For example, in the case of an emergency, a worker may want to stop or slow down a vehicle. Operation devices such as switches and buttons are installed near the manufacturing line so that the worker can easily operate the devices in the above case. However, if the device is installed in the transport path, it interferes with traveling of the vehicle and the work of the worker. Therefore, there is a problem that, since there is a limitation in the place where the devices are installed, the vehicle cannot be stopped quickly.

An object of the present disclosure is to provide a vehicle manufacturing system and a vehicle manufacturing method that can stop a vehicle quickly.

The invention is defined in the independent claims. Further aspects and preferred embodiments are defined in the dependent claims. Any aspects, embodiments and examples of the present disclosure which do not fall under the scope of the appended claims do not form part of the invention and are merely provided for illustrative purposes. A vehicle manufacturing system according to the present disclosure is a vehicle manufacturing system for performing control in such a way that a plurality of vehicles forming a platoon travel during a manufacturing process or a transporting process, the vehicle manufacturing system including: a camera configured to capture an image of a traveling area where the plurality of vehicles travel and an area near the traveling area; a worker detection unit configured to detect a worker who is near the vehicle by performing image processing on the image captured by the camera; and a stop control unit configured to analyze a plurality of frames in the captured image and stop the vehicle when the worker detected in a previous frame is not detected in a subsequent frame.

A vehicle manufacturing method according to the present disclosure is a vehicle manufacturing method for performing control in such a way that a plurality of vehicles forming a platoon travel during a manufacturing process or a transporting process, the vehicle manufacturing method including: a step of capturing, by a camera, an image of a traveling area where the plurality of vehicles travel and an area near the traveling area; a step of detecting a worker who is near the vehicle by performing image processing on the image captured by the camera; and a step of analyzing a plurality of frames in the captured image and stopping the vehicle when the worker detected in a previous frame is not detected.

According to the present disclosure, it is possible to provide a vehicle manufacturing system and a vehicle manufacturing method that can stop a vehicle quickly.

The above and other objects, features and advantages of the present disclosure will become more fully understood from the detailed description given hereinbelow and the accompanying drawings.

### BRIEF DESCRIPTION OF DRAWINGS

Fig. 1 is a schematic diagram showing a whole configuration of a vehicle manufacturing system;
Fig. 2 is a schematic diagram showing a part of the vehicle manufacturing system;
Fig. 3 is a plan view schematically showing a part of a traveling path of the vehicle manufacturing system;
Fig. 4 is a side view schematically showing a part of the traveling path of
Fig. 5 is a block diagram showing a control system of the vehicle manufacturing system;
Fig. 6 is a diagram for describing a state in which a worker falls over;
Fig. 7 is a flowchart showing a vehicle manufacturing method;
Fig. 8 is a diagram for describing travel control of a vehicle;
Fig. 9 is a control block diagram for describing a travel control example 1;
Fig. 10 is a flowchart for describing the travel control example 1;
Fig. 11 is a control block diagram for describing a travel control example 2; and
Fig. 12 is a flowchart for describing the travel control example 2.

### DESCRIPTION OF EMBODIMENTS

### First Embodiment

### Vehicle Manufacturing System

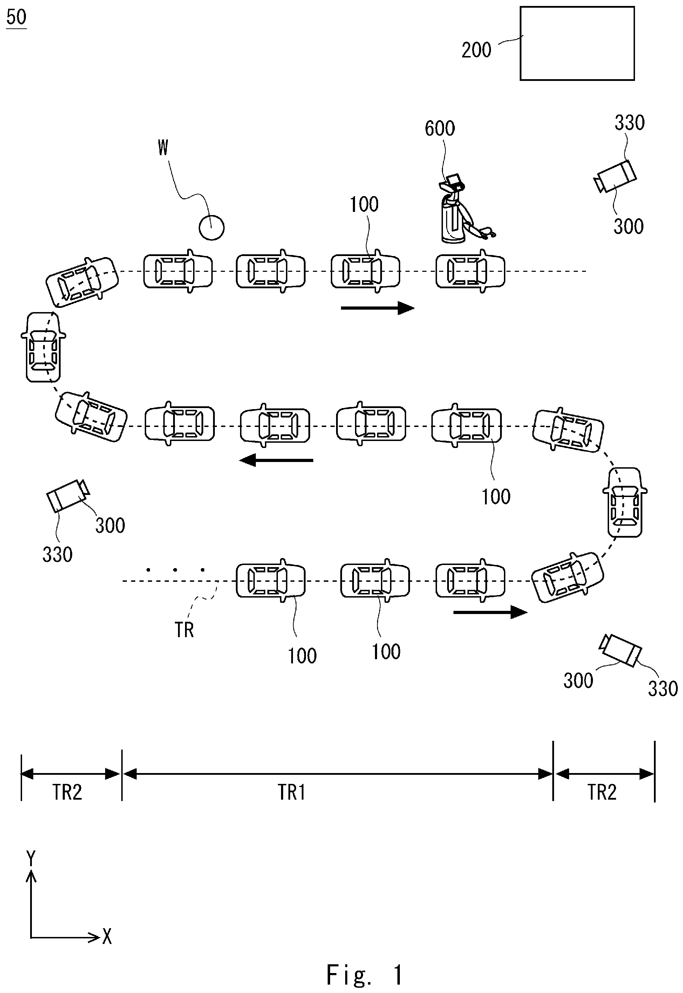

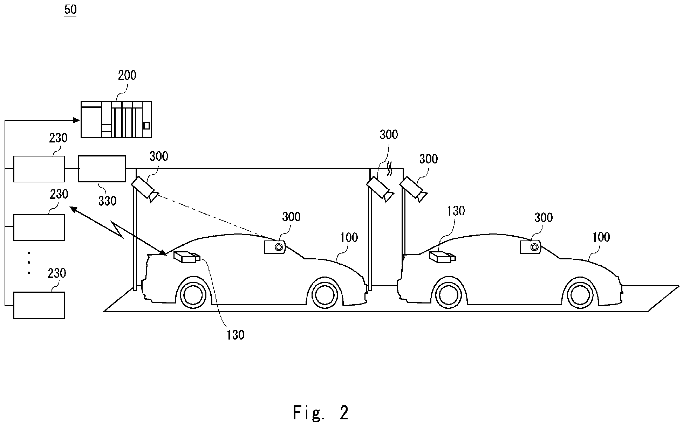

With reference to Figs. 1 and 2, a vehicle manufacturing system 50 according to this embodiment will be described. Fig. 1 is a schematic diagram showing a configuration of the vehicle manufacturing system 50. Fig. 2 is a diagram schematically showing two traveling vehicles 100. Fig. 1 shows an XY orthogonal coordinate system for the sake of clarity of the explanation.

The vehicle manufacturing system (this may also be referred to as the system) 50 is used in a vehicle manufacturing factory where vehicles 100 are manufactured. The vehicle manufacturing system 50 is also used in a transport location where a transporting process such as transportation to a yard or shipment is carried out. As shown in Fig. 1, the vehicle manufacturing system 50 includes a server 200, a sensor 300, and a robot 600. The plurality of vehicles 100 are self-driving vehicles that can travel by themselves during a manufacturing process. The vehicle manufacturing system 50 performs control in such a way that the plurality of vehicles 100 perform travel in a form of a platoon (i.e. a formation or an alignment).

The sensor 300 includes a communication apparatus 330 that transmits or receives data to or from the server 200. The server 200 includes a communication apparatus 230 that transmits or receives data to or from the sensor 300. Further, as shown in Fig. 2, the communication apparatus 230 has a function of transmitting or receiving data to or from the vehicle 100. Further, the vehicle 100 includes a communication apparatus 130 that receives data from the server 200. Each of the vehicles 100 includes the communication apparatus 130.

The communication apparatus 130, the communication apparatus 230, and the communication apparatus 330 may each be general-purpose equipment such as a network hub or a router apparatus. The communication apparatus 130, the communication apparatus 230, and the communication apparatus 330 each use, for example, general-purpose wireless communication such as WiFi (registered trademark). In each of the communication apparatus 130, the communication apparatus 230, and the communication apparatus 330, an address for specifying the communication partner is set. An address for communication is, for example, an Internet Protocol (IP) address.

Each of the vehicles 100 is a vehicle whose manufacturing has not yet been completed. As shown in Fig. 1, the vehicle 100 travels along a traveling path TR set in advance. The manufacturing of the vehicle 100 is gradually done as it travels along the traveling path TR. Specifically, while the vehicle 100 travels along the traveling path, workers W, a robot 600, or the like perform assembling of parts, switch operations, welding, inspection, and so on. The work in each manufacturing process is thus performed. The work in each manufacturing process is performed in a predetermined order, whereby the vehicle 100 is manufactured.

A plurality of vehicles 100 travel in a form of a platoon. Specifically, the vehicles 100 travel at a constant speed in such a way that distances between vehicles are constant at a predetermined distance. Further, the plurality of vehicles 100 travel at the same speed. Further, the traveling path TR includes a straight-ahead area TR1 where a vehicle 100 travels straight ahead and a turning area TR2 where the vehicle 100 makes a turn. In the straight-ahead area TR1, the traveling path TR has a linear shape.

The turning area TR2 is a place where the vehicle 100 changes its traveling direction. In the turning area TR2, the vehicle 100 makes a U-turn. In the turning area TR2, for example, the traveling path TR has an arcuate shape having a predetermined radius of curvature. In the turning area TR2, the traveling path TR is a semicircle. The turning area TR2 is provided in each end of the straight-ahead area TR1. For example, after traveling through the straight-ahead area TR1 in the +X direction, the vehicle 100 reaches the turning area TR2. After the vehicle 100 makes a turn by 180 degrees in the turning area TR2, the vehicle 100 travels through the straight-ahead area TR1 in the -X direction. On the other hand, after the vehicle 100 travels through the straight-ahead area TR1 in the -X direction, the vehicle 100 reaches the turning area TR2. After the vehicle 100 makes a turn by 180 degrees in the turning area TR2, the vehicle 100 travels through the straight-ahead area TR1 in the +X direction. In this manner, the manufacturing of the vehicle 100 is gradually done as it alternately passes through the straight-ahead area TR1 and the turning area TR2.

The sensor 300 is a camera that captures an image of the vehicle 100 which is moving or is stopped. The sensor 300 captures an image of one or a plurality of vehicles 100. The sensor 300 is provided to detect inter-vehicle distances. The server 200 is able to detect the position of the vehicle 100 in the factory based on the image captured by the sensor 300. The sensor 300 is installed, for example, on a wall surface, a support column, the ceiling or the like of the factory, and captures an image of the vehicle 100 from an oblique upward angle. The sensor 300 captures an image at an angle of view which includes two or more vehicles 100 that form a platoon. The sensor 300 may be installed at a height the same as that of the vehicles 100 and capture images of two or more vehicles 100 from a side direction thereof.

The communication apparatus 330 transmits the image captured by the sensor 300 to the server 200. The communication apparatus 330 may transmit, besides the captured image, information obtained from the captured image to the server 200. That is, the communication apparatus 330 transmits a result of detection detected in the sensor 300. Note that the communication apparatus 330 may be built in the sensor 300 or may be separated from the sensor 300. Further, the communication apparatus 330 may be shared among a plurality of sensors 300. That is, in a case where the plurality of sensors 300 are installed, one communication apparatus 330 may transmit data to the server 200.

As described above, after the sensor 300 captures an image of the vehicle 100, the communication apparatus 330 transmits the captured image and the like to the server 200. The communication apparatus 230 receives data of the captured image from the sensor 300. The server 200 performs predetermined image processing on the image captured by the sensor 300, whereby it is possible to specify inter-vehicle distances. For example, the server 200 calculates inter-vehicle distances of a plurality of vehicles 100 forming a platoon. The number of vehicles forming a platoon is not particularly limited and may be any number that is equal to or greater than three.

Further, the sensor 300 for detecting inter-vehicle distances is not limited to a camera. A sensor for detecting inter-vehicle distances may be various kinds of sensors such as an RGB camera, a far-infrared camera, or a LiDAR. The sensor 300 is not limited to an optical sensor, and may instead be a radar. As a matter of course, two or more sensors 300 may be installed, or two or more sensors 300 may be used in combination with each other. For example, the sensor 300 may include a LiDAR and a camera.

The communication apparatus 330 transmits a result of the detection to the server 200. As described above, the result of the detection transmitted from the sensor 300 may be a captured image or may be information extracted from the image. In a case where, for example, the sensor 300 has an image processing function, the sensor 300 transmits information extracted by image processing to the server 200.

Further, as shown in Fig. 2, the sensor 300 may be mounted on the vehicle 100. The sensor 300 is, for example, an in-vehicle camera, a LiDAR, a radar, or the like. In a case where the sensor 300 is an in-vehicle camera, the sensor 300 captures an image of a vehicle 100 in front (this vehicle may be referred to as a front vehicle). In a case where the sensor 300 is an in-vehicle LiDAR, the sensor 300 measures a distance from the vehicle 100 to the front vehicle 100. The communication apparatus 130 transmits the image and a result of the measurement to the server 200.

The server 200 controls a vehicle 100 in such a way that the vehicle 100 moves along the traveling path TR. Further, the server 200 controls a plurality of vehicles 100 in such a way that the vehicles 100 perform platoon traveling. For example, the vehicles 100 travel along the traveling path TR in one line. The server 200 transmits a control signal to each vehicle 100 by the communication apparatus 230.

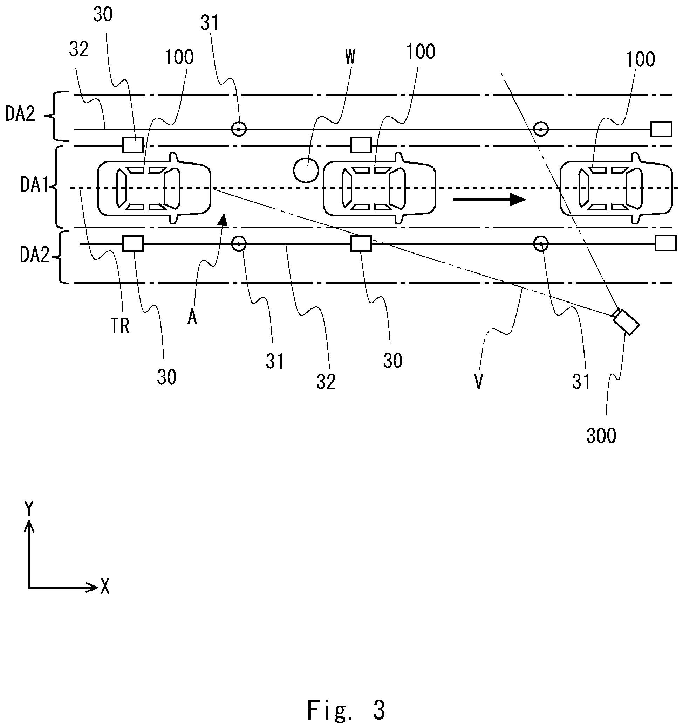

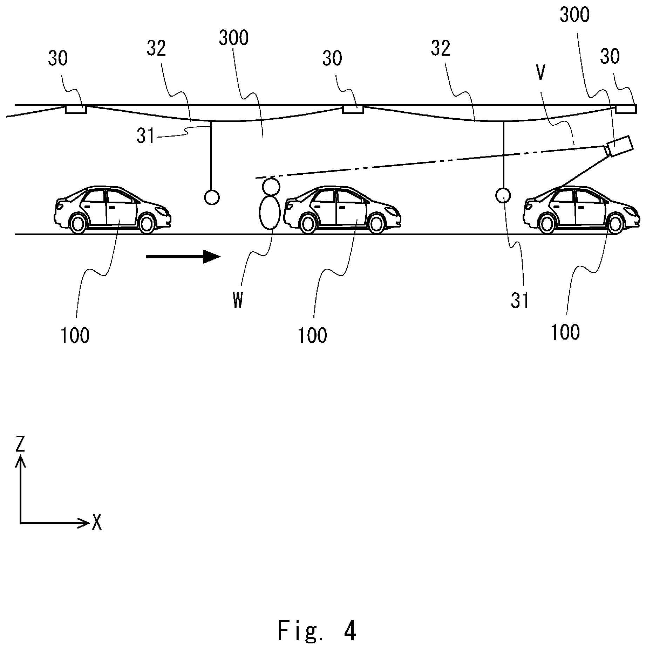

The detailed configuration of the traveling path TR and its peripheral equipment will be described with reference to Figs. 3 and 4. Fig. 3 is a plan view schematically showing a vehicle traveling along the traveling path TR and a worker W in its vicinity. Fig. 4 is a side view schematically showing a vehicle traveling along the traveling path TR and a worker W in its vicinity. Figs. 3 and 4 show three vehicles 100 autonomously traveling along the traveling path TR.

Here, the area where the vehicles 100 travel is referred to as a traveling area A. The traveling area A is an area including the traveling path TR. Here, since the traveling path TR is a straight line along the X direction in the XY plane view, the traveling area A is a belt-like area along the X direction. The traveling area A is a belt-like area having almost the same width as the vehicle width of the vehicle 100.

A worker W is present around the vehicle 100. The worker W is working on the vehicle 100. While the vehicle 100 is traveling in the traveling area A, the worker W performs parts assembly, switch operation, welding, inspection, etc. Thus, the work of each manufacturing process is executed. Then, the work of each manufacturing process is executed in a predetermined order, and thereby the vehicle 100 is manufactured. Even at a position away from the vehicle 100, the worker W is walking. Or, the worker W who has parts is walking toward the vehicle 100.

Here, the area corresponding to the traveling area A is called a detection area DA1. The area other than the detection area DA1 is called a non-detection area DA2. Here, the non-detection area DA2 is arranged on each side of the detection area DA1. Of course, the shape and arrangement of the detection area DA1 and the non-detection area DA2 are not limited to those shown in the drawing. The non-detection area DA2 is an area outside the detection area DA1, that is, an area other than the detection area DA1.

As described later, the server 200 determines whether the worker W has hidden in a blind spot of the vehicle 100 in the detection area DA1. On the other hand, the server 200 does not determine whether the worker W has hidden in a blind spot of the vehicle 100 in the non-detection area DA2. Detection processing in the detection area DA1 will be described later. The worker W is in the detection area DA1 or the non-detection area DA2.

Furthermore, a control equipment 30 is provided around the traveling area A. The control equipment 30 transmits a control signal for stopping the vehicle 100 to the server 200. The control equipment 30 is installed, for example, on the ceiling or wall of a factory building. The installation position of the control equipment 30 may be movable. Here, the control equipment 30 is installed on both sides of the traveling area A. In other words, the control equipment 30 is installed on both the +Y side and the -Y side of the traveling area A. Of course, the installation position and the number of the control equipment 30 are not particularly limited.

A string 31 is connected to the control equipment 30. The control equipment 30 and the string 31 are installed at a height that does not interfere with the worker W and the vehicle 100. In addition, a suspension string 32 is attached to the string 31. The suspension string 32 is suspended to a height that the worker W can reach. When the worker W pulls the suspension string 32, the control equipment 30 is turned on and a control signal is transmitted. This stops the vehicle 100.

When the worker W finds a problem, trouble, or the like, the worker W pulls the suspension string 32 so that the vehicle 100 can be brought to an emergency stop. The suspension string 32 functions as a stop switch to stop the vehicle 100. In other words, when the worker W pulls the suspension string 32 which is a stop switch, the control equipment 30 is turned on and a control signal is transmitted to the server 200. As a result, the vehicle 100 is stopped. The control equipment 30, the string 31, and the suspension string 32 function as emergency stop equipment.

Here, the suspension string 32 is arranged outside the traveling area A so as not to interfere with the vehicle 100. If the suspension string 32 operated by the worker W is installed in the traveling area A, it may come into contact with the traveling vehicle 100. There is a case where the worker W in the vicinity of the vehicle 100 wants to stop the vehicle 100 immediately. Therefore, the suspension string 32 is installed on both sides of the traveling area A. In other words, the suspension string 32 is arranged in the above-mentioned non-detection area DA2. If the number of the suspension strings 32 is too large, it may obstruct the worker W's work or passage. Therefore, the suspension strings 32 are scattered in the non-detection area DA2.

When the worker W in the traveling area A, that is, the detection area DA1 stops the vehicle 100 by the suspension string 32, the worker W moves to the suspension string 32 and pulls the suspension string 32. Therefore, if the distance from the worker W to the suspension string 32 is far, it is difficult to quickly pull the suspension string 32. Therefore, in the detection area DA1, the vehicle 100 can be controlled based on the image captured by the sensor 300.

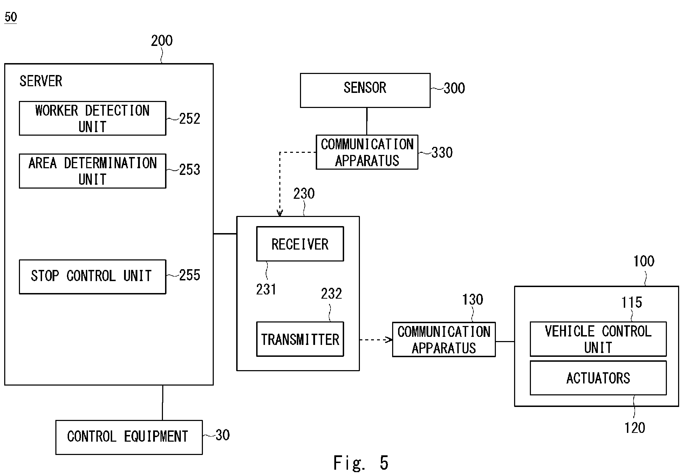

The control for stopping the vehicle 100 during the manufacturing process or the transport process will be described below with reference to Fig. 5. Fig. 5 is a block diagram showing a configuration of the control system of the vehicle manufacturing system 50. As shown in Fig. 5, the server 200 includes a worker detection unit 252, an area determination unit 253, and a stop control unit 255. While one vehicle 100 and one sensor 300 are shown in Fig. 5, a plurality of vehicles 100 and sensors 300 are actually provided, as shown in Fig. 1.

The vehicle 100 includes a vehicle control unit 115, actuators 120, and a communication apparatus 130. The sensor 300 includes a communication apparatus 130. Note that the server 200 is not limited to a single physical apparatus, and a plurality of servers 200 may be disposed in a distributed manner. For example, the database may be a storage device or a cloud server provided separately from the processor.

The communication apparatus 230 includes a receiver 231 and a transmitter 232. The receiver 231 receives various signals, data and the like from the sensor 300 and the vehicle 100. For example, the receiver 231 receives data indicating the detection result of the sensor 300. The data received from the sensor 300 may be image data or data extracted from the image data.

The transmitter 232 transmits various signals, data and the like to the sensor 300 and the vehicle 100. For example, the transmitter 232 transmits control instruction values to the vehicle 100. Of course, the server 200 may transmit and receive data other than the above. As the communication between the receiver 231 and the transmitter 232, it is possible to use processing according to a general-purpose communication standard such as WiFi (registered trademark).

The communication apparatus 130 of the vehicle 100 is a wireless terminal for wireless communication with the server 200. An **IP** (Internet Protocol) address or the like is set in the communication apparatus 130. When the communication apparatus 130 of the vehicle 100 receives the control instruction values, the vehicle 100 moves according to the control instruction values. The actuators 120 include a wheel motor for driving the wheels, a steering motor for controlling the steering angle, and a brake for stopping the vehicle. The vehicle control unit 115 generates a control signal to control the actuators 120 in response to the control instruction. The vehicle control unit 115 may consist of an ECU (Electronic Control Unit). Thus, the vehicle 100 can move along the traveling path TR.

In the following description, it is assumed that the server 200 performs image processing or the like on the captured image acquired from the sensor 300, but the processing may be performed outside the server 200. For example, the sensor 300 may perform a part of the processing. Specifically, the sensor 300 may extract feature values necessary for image processing and transmit the feature values to the server 200. Alternatively, a processor such as a GPU (Graphics Processing Unit) provided in the sensor 300 may detect the worker W and transmit the detection result.

As described above, the sensor 300 transmits the captured image to the server 200. The captured image may be a moving image or a still image. When the communication apparatus 230 of the server 200 receives the captured image, the worker detection unit 252 performs image processing on the captured image, thereby detecting the worker W included in the captured image. For example, the worker detection unit 252 detects each worker W by performing image processing on the captured image. An AI model constructed by machine learning or an image processing program can be used for the processing to detect the worker W.

Since a known technique can be used for the processing of the worker detection unit 252, a detailed description thereof will be omitted. As described above, the sensor 300 may transmit data such as feature values extracted from the captured image instead of transmitting the captured image. Alternatively, the processing of the worker detection unit 252 may be performed by the sensor 300.

For example, the worker detection unit 252 can detect the worker W by inputting a captured image to the detection model utilizing artificial intelligence. The detection model may be, for example, a learned machine learning model learned so as to implement one of semantic segmentation or instance segmentation. This machine learning model may be, for example, convolutional neural network (hereinafter, CNN) learned by supervised learning using a learning dataset. The learning dataset has, for example, a plurality of training images including a worker and a ground-truth label indicating whether the area where the worker is located is a detection area or a non-detection area. When CNN learning is performed, parameters of the CNN are preferably updated in such a way that the error between the result of the output by the detection model and the ground-truth label is reduced by a back propagation method.

The stop control unit 255 performs image analysis on the plurality of frames of the captured image, and stops the vehicle 100 if the worker W detected in the previous frame is not detected in the subsequent frame. The sensor 300 captures an image with the angle of view V from the front so as to include the vehicle 100 and the worker W behind it, as shown in Figs. 3 and 4. Here, the sensor 300 is positioned diagonally downward. The worker W is immediately behind the vehicle 100. In the frame, the lower body and the like of the worker W are hidden behind the vehicle 100. In other words, the head, the upper body, and the like of the worker W are included in the frame. Assume that the worker W is assembling the vehicle 100 from behind.

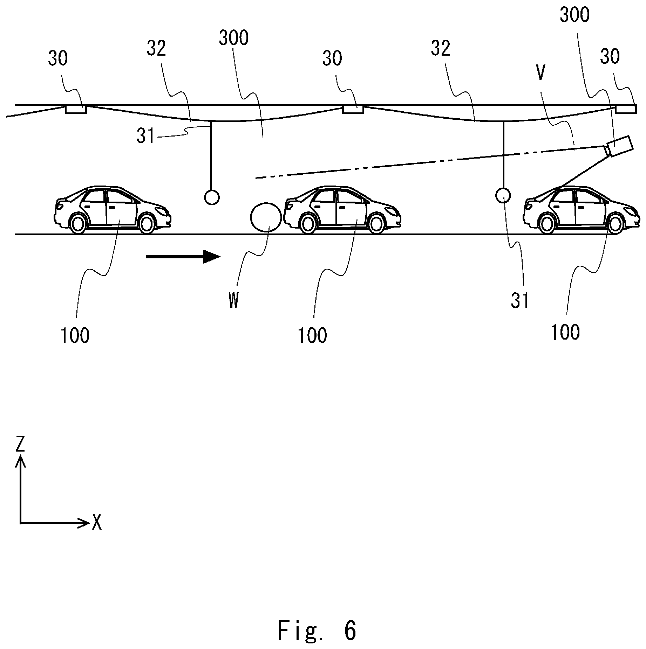

At this time, Fig. 6 shows a state in a case where the worker W falls. In Fig. 6, the overturned worker W is hidden in the blind spot of the vehicle 100. In other words, the sensor 300 cannot image the worker W hidden in the blind spot. Therefore, the stop control unit 255 analyzes the plurality of frames and detects that the worker W, who is in the previous frame, has disappeared from the frame. In other words, the stop control unit 255 detects that the worker W is hidden in the blind spot of the vehicle 100.

If the worker W falls over, the whole body or most part of the worker W becomes the blind spot of the vehicle 100 or the like. Therefore, the worker W, who is in the previous frame, is not included in the next frame. The stop control unit 255 can detect the fall of the worker W or the like by comparing the plurality of frames. If the worker W enters the blind spot of the vehicle 100 with respect to the sensor 300, the worker W disappears from the frame. Therefore, if the worker W detected by the worker detection unit 252 in one frame cannot be detected in the next frame, the stop control unit 255 generates a stop signal to stop the vehicle 100.

The transmitter 232 then sends a stop signal to the vehicle 100. When the communication apparatus 130 of the vehicle 100 receives the stop signal, the vehicle control unit 115 stops the vehicle 100. For example, the vehicle control unit 115 activates the brake. This stops the vehicle 100. In this way, if the worker W falls around the vehicle 100, the stop control unit 255 can quickly stop the vehicle 100. This prevents the vehicle 100 from touching the fallen worker W.

For example, the worker detection unit 252 detects the worker W for each frame and stores the number and the position of workers W in a memory or the like. The stop control unit 255 compares the number of workers W between two consecutive frames. If the number of workers W decreases from the previous frame, the stop control unit 255 detects that the worker W is hidden in the blind spot. Of course, if the worker W moves into the angle of view from the outside of the angle of view V, the stop control unit 255 performs processing taking into account the increase in the number of workers. In addition, the worker detection unit 252 is not limited to detection for each frame, but may detect workers for each of the plurality of frames. In other words, the stop control unit 255 only needs to compare a certain frame with the previous frame.

Since the vehicles 100 are moving, it is difficult to prevent blind spots from occurring in all of the vehicles 100. In other words, it is necessary to install the sensors 300 at various positions and angles in order to image all of the front, rear, left, and right sides of the moving vehicle 100. In this embodiment, even if a blind spot occurs in the sensor 300, if the worker W falls in the blind spot, the stop control unit 255 stops the vehicle 100. This prevents the fallen worker W from coming into contact with the vehicle 100. Safety can be improved without increasing the number of sensors 300. Furthermore, since the number of sensors 300 can be reduced, the load of image processing can be reduced.

The stop control unit 255 is configured to stop the vehicle 100 when the worker W is assumed to be in the blind spot of the camera caused by the vehicle 100. For example, the stop control unit 255 may estimate that the worker W is hidden in the blind spot of the vehicle 100 by referring to the positional relationship between the worker W and the vehicle 100 with respect to the sensor 300. As shown in Fig. 4, assume that the vehicle 100 is between the worker W and the sensor 300. In this case, the worker W behind the vehicle 100 is partially hidden by the vehicle 100. Specifically, in Fig. 4, since the lower body of the worker W is hidden by the vehicle 100, only the upper body is shown in the captured image.

Therefore, the stop control unit 255 may detect the positional relationship between the vehicle 100 and the worker W by image analysis. For example, the boundary line between the vehicle 100 and the worker W can be obtained, and the positional relationship between the vehicle 100 and the worker W can be detected by the shape or the like of the boundary line. The stop control unit 255 may use a machine learning model to estimate the positional relationship between the worker W and the vehicle 100. The stop control unit 255 may stop the vehicle 100 when the worker W behind the vehicle 100 disappears from the frame.

The stop control unit 255 determines whether the worker W has moved to the outside of the angle of view V or has moved in a blind spot of the vehicle 100 and no longer appears in the frame. For example, if the worker W who is in a place corresponding to the vicinity of the periphery of the frame walks toward the outside of the angle of view V, the worker W may fall out of the frame. In such a case, the stop control unit 255 does not stop the vehicle 100 even if the number of workers decreases from that in the previous frame. **In** this way, the server 200 can properly control the vehicle 100.

For example, the worker detection unit 252 detects the position of the worker W for each worker. Here, the position of the worker W may be a pixel address in a frame or a position in a factory. The stop control unit 255 compares the position of the worker W in each frame and estimates the moving direction and moving speed of the worker W. The stop control unit 255 may use a machine learning model to estimate the moving speed and moving direction of the worker W.

The stop control unit 255 determines whether the worker W is moving outside the angle of view V based on the moving direction. If the worker W, who is moving from the vicinity of the periphery of the frame toward the outside of the angle of view V, disappears from the frame, the stop control unit 255 determines that the worker W disappeared from the frame due to movement. In this case, since the worker W has moved outside the angle of view V by walking, the stop control unit 255 does not determine that the worker W fell. The stop control unit 255 does not generate a stop signal.

On the other hand, if the worker W, who is in the center of the captured image, has disappeared from the frame, the stop control unit 255 determines that the worker W fell. Alternatively, if the worker W, who is moving toward the center of the angle of view V, has disappeared from the frame, the stop control unit 255 determines that the worker W fell. Therefore, the stop control unit 255 generates a stop signal to stop the vehicle 100. This allows the server 200 to properly control the vehicle 100.

By performing image analysis on the plurality of frames, the stop control unit 255 can estimate whether the worker W is hidden in the blind spot of the vehicle 100. Furthermore, estimation may be performed using a machine learning model. The machine learning model is a Recurrent Neural Network (RNN) model or a Long Short Term Memory (LSTM) model that uses the plurality of frame images as input.

In addition, the stop control unit 255 may detect the posture of the worker W. When the stop control unit 255 detects, from the posture of the worker W, that the worker W has fallen, it may generate a stop signal and stop the vehicle 100. Thus, the vehicle 100 can be quickly stopped. The stop control unit 255 may use a machine learning model that detects posture or a machine learning model that detects a fall.

Furthermore, the server 200 may have an area determination unit 253. The processing in the area determination unit 253 will be described below.

The area determination unit 253 determines whether the detected worker W is in the detection area DA1 or the non-detection area DA2. For example, the place of the location of the sensor 300 in a building is fixed. An angle of view is set for each sensor 300. The locations of the traveling area A, the traveling path TR, the detection area DA1, and the non-detection area DA2 in the angle of view of the sensor 300 are known. In the captured image, it is possible to determine whether the worker W is in the detection area DA1 or the non-detection area DA2 according to the location where the worker W is detected, that is, the XY address. Of course, it is possible to identify the worker W in the detection area DA1 based on the size of the worker W in the captured image and its positional relationship with the vehicle 100 and other objects.

An AI model built by machine learning or an image processing program can be used for the processing by the area determination unit 253. A single machine learning model can be used for the processing by the worker detection unit 252 and the area determination unit 253. In this case, the machine learning model outputs the person in the detection area DA1 using the captured image or feature values extracted from the captured image as input data. In other words, the machine learning model may detect and output only the worker W in the detection area DA1.

In the area determination unit 253, the stop control unit 255 stops the vehicle when the worker W detected in the detection area DA1 is no longer detected. As described above, the detection area DA1 corresponds to the traveling area A where the vehicle 100 is traveling. Therefore, when the worker W in the detection area DA1 falls, he/she may contact the vehicle 100. Therefore, if the worker W in the detection area DA1 disappears from the frame, the stop control unit 255 determines that the worker W has fallen. Therefore, the stop control unit 255 generates and transmits a stop signal. Thus, the server 200 can quickly stop the vehicle 100.

On the other hand, the non-detection area DA2 is outside of the traveling area A. Therefore, even if the worker W falls over in the non-detection area DA2, it is unlikely that he/she contacts the vehicle 100. In other words, even if the worker W enters the blind spot of the vehicle 100 or other object in the non-detection area DA2, it is unlikely that the worker W contacts the vehicle 100. Therefore, even if the worker W in the non-detection area DA2 disappears from the frame, the stop control unit 255 does not stop the vehicle 100. Thus, the vehicle 100 can be properly controlled.

If the worker W in the detection area DA1 has moved to the non-detection area DA2, the stop control unit 255 determines that the worker W has not fallen. If the worker W in the detection area DA1 has moved outside the angle of view V, the stop control unit 255 determines that the worker W has not fallen. Therefore, in these cases, the stop control unit 255 does not generate a stop signal. Thus, the server 200 can properly control the vehicle 100.

In the event of an abnormality such as falling of the worker W, the server 200 can quickly stop the vehicle 100. Also, the worker W in the detection area DA1 is likely to be far from the suspension string 32. Therefore, if the worker W in the detection area DA1 finds an abnormality or the like, the worker W can quickly control the vehicle 100.

In the factory, the detection area DA1 and the non-detection area DA2 may be separated according to the location of the sensor 300 or the working process. For example, in the traveling area A, the order of the working processes in which the worker W works and the working place are predetermined. In this case, depending on the working process, it is possible to specify in advance where the worker W is in a blind spot and thus does not appear in the captured image.

Assume, for example, that there is a working process in which the worker W assembles parts into the vehicle 100 while sitting or bending. In such a working process, the worker W is likely to hide in the blind spot of the vehicle 100. Assume another example in which there is a process in which two or more workers W perform work. In this case, one worker may hide in the blind spot of the other worker. Therefore, even if the worker W does not fall over, the worker W will not appear in the frame. Therefore, in traveling area A, the location where the specific working process is performed can be set as non-detection area DA2. In this way, the detection area DA1 and the non-detection area DA2 may be set based on the working process and camera installation in the facility. Depending on the map or the like in the factory, the detection area DA1 and the non-detection area DA2 can be set.

The stop signal may also include information indicating the vehicle 100 to be stopped. For example, the stop signal may include the ID or the like of the vehicle 100 to be stopped. In this case, the stop control unit 255 generates a stop signal including the ID or the like of the vehicle to be stopped. The vehicle 100 to be stopped may be determined by the position of the worker W. The stop control unit 255 stops the vehicles 100 before and after the worker W that has disappeared from the frame. The stop control unit 255 stops only two vehicles 100. The stop control unit 255 can identify, from the position where the worker W is present, vehicles 100 to be stopped. Of course, the numbers of vehicle 100 to be stopped by stop control unit 255 is not limited to two. The vehicle 100 to be stopped by the stop control unit 255 may be only one vehicle immediately after the worker W, or three or more vehicles.

When the worker W pulls the suspension string 32 (see Figs. 3 and 4), the control equipment 30 transmits a signal to stop the vehicle 100 to the server 200. In the same manner as described above, the server 200 transmits a stop signal for stopping the vehicle 100 to the vehicle 100. Thus, the worker W in the non-detection area DA2 can quickly stops the vehicle 100. Alternatively, the control equipment 30 may directly transmit a stop signal to the vehicle 100.

In order to increase the detection accuracy of the worker W or the accuracy of posture detection, the worker W may wear clothes with characteristic colors or patterns. Alternatively, the worker W may wear a wristband or the like in order to increase the detection accuracy of the arm. In order to increase the detection accuracy of the head, a mark or the like may be provided on the helmet or hat. In image processing, worker detection and posture detection are performed by referring to colors, patterns, wristbands, marks, and the like. In machine learning, images of workers wearing characteristic uniforms, wristbands, hats, helmets, and the like may be used as training data. Then a machine learning model is created by supervised learning which uses a frame when the worker W is in the blind spot as ground-truth data.

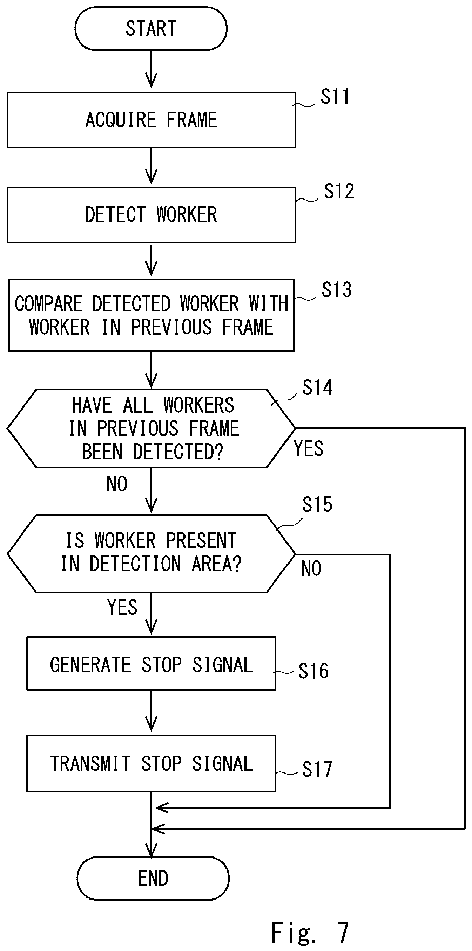

A vehicle manufacturing method will be described with reference to Fig. 7. Fig. 7 is a flowchart showing the vehicle manufacturing method according to this embodiment. Specifically, Fig. 7 shows a processing flow for one frame. Therefore, the processing shown in Fig. 6 is executed for each frame of the sensor 300.

First, the server 200 acquires a frame of the captured image from the sensor 300 (S11). The worker detection unit 252 detects the worker W included in the captured image (S12). The stop control unit 255 compares the detected worker W with the worker W in the previous frame (S13). The stop control unit 255 determines whether all the workers present in the previous frame have been detected (S14).

If all the workers present in the previous frame have been detected (YES in S14), the process ends. In other words, the server 200 repeats the same process for the next frame. If not all the workers present in the previous frame have been detected (NO in S14), the stop control unit 255 determines whether a worker is present in the detection area DA1 (S15). In other words, it is determined whether the worker that is not detected in the subsequent frame is present in the detection area DA1 in the previous frame. If the worker is not present in the detection area DA1 in the previous frame (NO in S15), the process ends. In other words, the server 200 repeats the same process for the next frame.

If the worker is present in the detection area DA1 in the previous frame (YES in S15), the stop control unit 255 generates a stop signal (S16). The transmitter 232 sends a stop signal to the vehicle 100 (S17). As a result, the vehicle 100 can be quickly stopped.

Then, the server 200 repeats the above processing for each frame image of the sensor 300. Of course, the server 200 may not perform the above processing for all frame images of the sensor 300, but may perform the above processing only for some frame images. Furthermore, the server 200 may perform the above processing for some of the sensors 300 without performing the above processing for all the sensors 300.

Hereinafter, travel control examples for controlling traveling of the vehicle 100 in a system will be explained.

### <A. Travel Control Example 1>

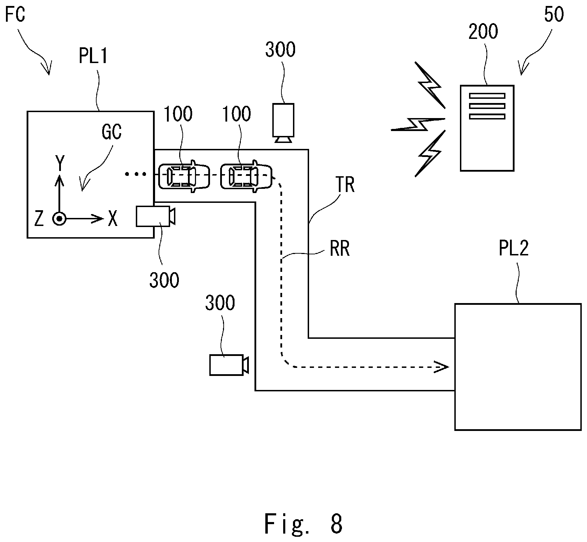

Fig. 8 is a conceptual diagram showing a configuration of a system 50 according to a travel control example 1. The system 50 includes a plurality of vehicles 100, each of which corresponds to a mobile body, a server 200, and one or more sensors 300.

Note that, when the mobile body is other than a vehicle, the terms "vehicle" and "car" in the present disclosure can be replaced by a "mobile body" as appropriate, and the term "travel" can be replaced by "move" as appropriate.

The vehicle 100 is configured to be able to travel by unmanned driving. The "unmanned driving" means driving not dependent on a driver's traveling operation. The traveling operation means an operation regarding at least one of "run", "turn", or "stop" of the vehicle 100. The unmanned driving is achieved by automatic or manual remote control that uses an apparatus located in the outside of the vehicle 100, or by autonomous control of the vehicle 100. Any passenger who does not perform the traveling operation may get on the vehicle 100 traveled by unmanned driving. The passenger who does not perform the traveling operation includes, for example, a person who is just sitting on a seat of the vehicle 100, and a person who is performing work such as an operation of assembling, an operation of inspection, or an operation of switches, which is an operation other than the traveling operation, while getting in the vehicle 100. Note that the driving by the traveling operation of the driver may be referred to as "manned driving".

The "remote control" here includes "complete remote control" in which all the operations of the vehicle 100 are completely determined from the outside of the vehicle 100 and "partial remote control" in which a part of the operations of the vehicle 100 is determined from the outside of the vehicle 100. Further, "autonomous control" includes "complete autonomous control" in which the vehicle 100 autonomously controls its own operation without receiving any piece of information from an external apparatus outside the vehicle 100 and "partial autonomous control" in which the vehicle 100 autonomously controls its own operation using information received from the external apparatus outside the vehicle 100.

In this embodiment, the system 50 is used in a factory FC which manufactures the vehicles 100. The reference coordinate system of the factory FC is a global coordinate system GC. That is, a desired position in the factory FC is expressed by coordinates of X, Y, and Z in the global coordinate system GC. The factory FC includes a first place PL1 and a second place PL2. The first place PL1 and the second place PL2 are connected to each other by a traveling path TR along which the vehicle 100 can travel. A plurality of sensors 300 are installed along the traveling path TR in the factory FC. The positions of the respective sensors 300 in the factory FC are adjusted in advance. The vehicle 100 moves from the first place PL1 to the second place PL2 along the traveling path TR by unmanned driving.

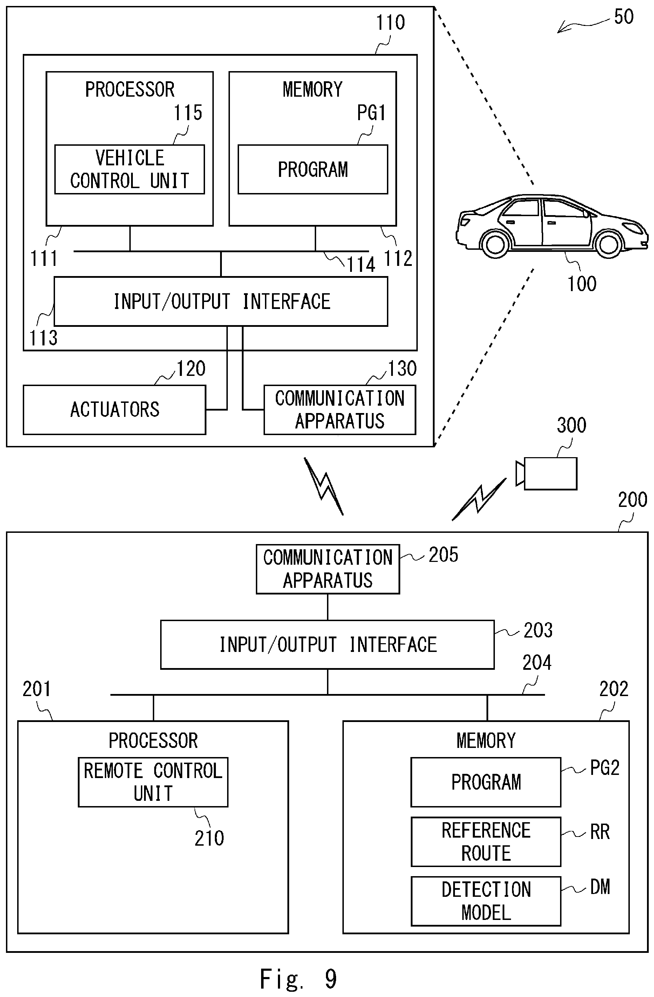

Fig. 9 is a block diagram showing a configuration of the system 50. The vehicle 100 includes a vehicle control apparatus 110 for controlling each part of the vehicle 100, actuators 120 including one or more actuators that drive under a control of the vehicle control apparatus 110, and a communication apparatus 130 for communicating with an external apparatus such as the server 200 by wireless communication. The actuators 120 include an actuator of a drive apparatus for accelerating the vehicle 100, an actuator of a steering apparatus for changing a traveling direction of the vehicle 100, and an actuator of a control apparatus for decelerating the vehicle 100.

The vehicle control apparatus 110 is composed of a computer including a processor 111, a memory 112, an input/output interface 113, and an internal bus 114. The processor 111, the memory 112, and the input/output interface 113 are connected to one another via the internal bus 114 in such a way that they can communicate with one another. The actuators 120 and the communication apparatus 130 are connected to the input/output interface 113. The processor 111 executes a program PG1 stored in the memory 112, thereby implementing various functions including a function as a vehicle control unit 115.

The vehicle control unit 115 causes the vehicle 100 to travel by controlling the actuators 120. The vehicle control unit 115 is able to cause the vehicle 100 to travel by controlling the actuators 120 using a travel control signal received from the server 200. The travel control signal is a control signal for traveling the vehicle 100. In this embodiment, the travel control signal includes an acceleration and a steering angle of the vehicle 100 as parameters. In another embodiment, the travel control signal may include, in place of or in addition to the acceleration of the vehicle 100, a speed of the vehicle 100 as a parameter.

The server 200 is composed of a computer including a processor 201, a memory 202, an input/output interface 203, and an internal bus 204. The processor 201, the memory 202, and the input/output interface 203 are connected to one another via the internal bus 204 in such a way that they can communicate with one another. A communication apparatus 205 for communicating with various kinds of apparatuses provided outside the server 200 is connected to the input/output interface 203. The communication apparatus 205 can communicate with the vehicle 100 by wireless communication and can communicate with each of the sensors 300 by wired communication or wireless communication. The processor 201 executes a program PG2 stored in the memory 202, thereby implementing various functions including the function as a remote control unit 210.

The remote control unit 210 acquires a result of detection by the sensors, generates a travel control signal for controlling the actuators 120 of the vehicle 100 using the result of the detection, and transmits the travel control signal to the vehicle 100, thereby causing the vehicle 100 to travel by remote control. The remote control unit 210 may generate not only the travel control signal but also, for example, control signals for controlling actuators for operating various kinds of auxiliary equipment provided in the vehicle 100 or various kinds of equipment such as a windshield wiper, power windows, or lamps. That is, the remote control unit 210 may operate these various kinds of equipment or various kinds of auxiliary equipment by remote control.

The sensor 300 is a sensor that is provided outside the vehicle 100. The sensor 300 according to this embodiment is a sensor that captures the vehicle 100 from the outside of the vehicle 100. The sensor 300 includes a communication apparatus (not shown) and can communicate with other apparatuses such as the server 200 and so on by wired communication or wireless communication.

Specifically, the sensor 300 is composed of a camera. The camera as the sensor 300 captures an image including the vehicle 100, and outputs the captured image as a result of detection.

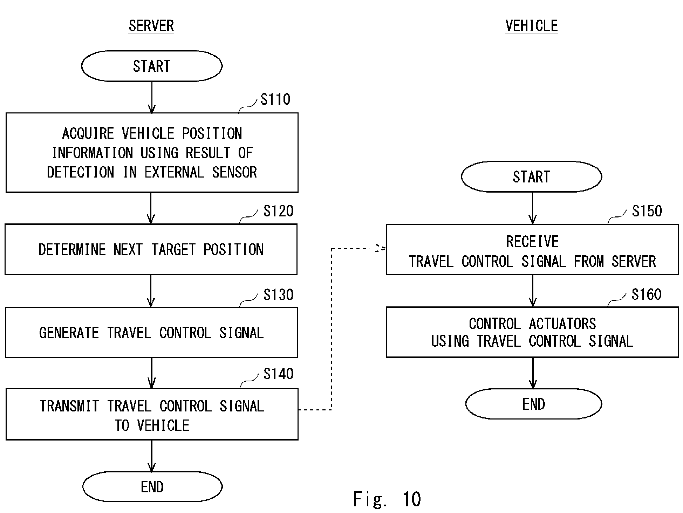

Fig. 10 is a flowchart showing a processing procedure of travel control of the vehicle 100 according to the travel control example. In the processing procedure shown in Fig. 10, the processor 201 of the server 200 functions as the remote control unit 210 by executing the program PG2. Further, the processor 111 of the vehicle 100 functions as the vehicle control unit 115 by executing the program PG1.

In Step S110, the processor 201 of the server 200 acquires vehicle position information of the vehicle 100 using the result of the detection output from the sensor 300. The vehicle position information is position information that forms a basis for generating a travel control signal. In this embodiment, the vehicle position information includes the position and the orientation of the vehicle 100 in a global coordinate system GC of the factory FC. Specifically, in Step S110, the processor 201 acquires the vehicle position information using the captured image acquired from the camera, which is the sensor 300.

Specifically, in Step S110, the processor 201 detects, for example, the outline of the vehicle 100 from the captured image, calculates the coordinate system of the captured image, that is, coordinates of measurement points of the vehicle 100 in the local coordinate system, and converts the calculated coordinates into coordinates in a global coordinate system GC, thereby acquiring the position of the vehicle 100. The outline of the vehicle 100 included in the captured image can be detected, for example, by inputting the captured image to the detection model DM that uses artificial intelligence. The detection model DM is prepared, for example, in the system 50 or in the outside of the system 50 and is stored in the memory 202 of the server 200 in advance. The detection model DM may be, for example, a learned machine learning model learned so as to implement one of semantic segmentation or instance segmentation. This machine learning model may be, for example, convolutional neural network (hereinafter, CNN) learned by supervised learning using a learning dataset. The learning dataset includes, for example, a plurality of training images including the vehicle 100, and a label indicating whether each area in the training image is an area indicating the vehicle 100 or an area indicating a part other than the vehicle 100. When CNN learning is performed, parameters of the CNN are preferably updated in such a way that the error between the result of the output by the detection model DM and the label is reduced by a back propagation method. Further, the processor 201 is able to acquire the orientation of the vehicle 100 by estimating it based on the direction of the moving vector of the vehicle 100 calculated from changes in positions of feature points of the vehicle 100 between frames of the captured image using an optical flow method.

In Step S120, the processor 201 of the server 200 determines the target position that the vehicle 100 should go next. In this embodiment, the target position is expressed by coordinates of X, Y, and Z in a global coordinate system GC. The memory 202 of the server 200 stores a reference route RR, which is a route along which the vehicle 100 should travel, in advance. The route is expressed by a node indicating the departure place, nodes indicating passage points, a node that indicates the target position, and a link connecting the respective nodes. The processor 201 determines the target position that the vehicle 100 should go next using the vehicle position information and the reference route RR. The processor 201 determines the target position on the reference route RR which is ahead of the current position of the vehicle 100.

In Step S130, the processor 201 of the server 200 generates a travel control signal for traveling the vehicle 100 toward the determined target position. The processor 201 calculates the traveling speed of the vehicle 100 from the transition of the position of the vehicle 100 and compares the calculated traveling speed with the target speed. In general, when the traveling speed is lower than the target speed, the processor 201 determines the acceleration in such a way that the vehicle 100 accelerates. On the other hand, when the traveling speed is higher than the target speed, the processor 201 determines the acceleration in such a way that the vehicle 100 decelerates. Further, when the vehicle 100 is positioned on the reference route RR, the processor 201 determines the steering angle and the acceleration to prevent the vehicle 100 from being deviated from the reference route RR. On the other hand, when the vehicle 100 is not positioned on the reference route RR, that is, when the vehicle 100 is deviated from the reference route RR, the processor 201 determines the steering angle and the acceleration in such a way that the vehicle 100 returns onto the reference route RR.

In Step S140, the processor 201 of the server 200 transmits a generated travel control signal to the vehicle 100. The processor 201 repeats, in a predetermined cycle, acquisition of the position of the vehicle 100, determination of the target position, generation of the travel control signal, transmission of the travel control signal, and the like.

In Step S150, the processor 111 of the vehicle 100 receives the travel control signal transmitted from the server 200. In Step S160, the processor 111 of the vehicle 100 controls the actuators 120 using the received travel control signal, thereby causing the vehicle 100 to travel at an acceleration and a steering angle indicated in the travel control signal. The processor 111 repeats reception of the travel control signal, and control of the actuators 120 in a predetermined cycle. With the system 50 in this example, it is possible to cause the vehicle 100 to travel by remote control and to move the vehicle 100 without using transport equipment such as cranes or conveyors.

### <B: Travel Control Example 2>

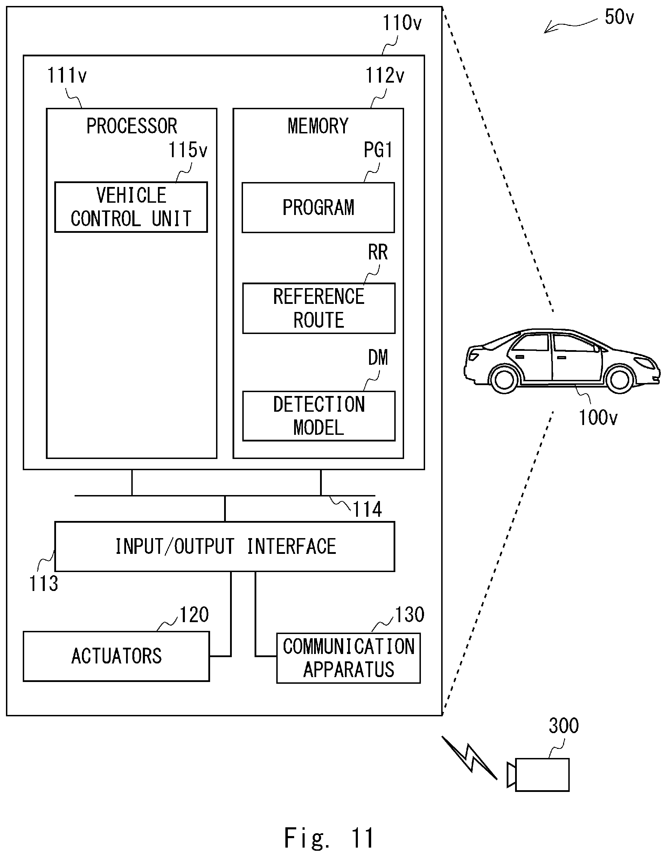

Fig. 11 is an explanatory diagram showing a schematic configuration of a system 50v according to a travel control example 2. In this example, the system 50v is different from that in the travel control example 1 in that the system 50v does not include the server 200. Further, a vehicle 100v in this configuration can travel by autonomous control of the vehicle 100v. The other configurations are the same as those stated above unless otherwise specified.

In this example, a processor 111v of a vehicle control apparatus 110v functions as a vehicle control unit 115v by executing a program PG1 stored in a memory 112v. The vehicle control unit 115v acquires a result of output by a sensor, generates a travel control signal using the result of the output, and outputs the generated travel control signal to operate the actuators 120, thereby enabling the vehicle 100v to travel by autonomous control. In this example, the memory 112v stores, besides the program PG1, a detection model DM and a reference route RR in advance.

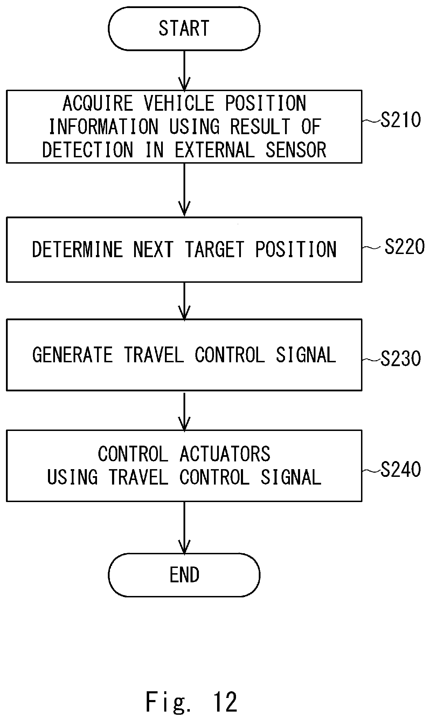

Fig. 12 is a flowchart showing a processing procedure of a travel control of the vehicle 100v in Travel control Example 2. In the processing procedure shown in Fig. 12, the processor 111v of the vehicle 100v functions as the vehicle control unit 115v by executing the program PG1.

In Step S210, the processor 111v of the vehicle control apparatus 110v acquires vehicle position information using a result of detection output from a camera, which is the sensor 300. In Step S220, the processor 111v determines the target position that the vehicle 100v should go next. In Step S230, the processor 111v generates a travel control signal for causing the vehicle 100v to travel toward the determined target position. In Step S240, the processor 111v controls the actuators 120 using the generated travel control signal, thereby causing the vehicle 100v to travel according to a parameter indicated in the travel control signal. The processor 111v repeats acquisition of the vehicle position information, determination of the target position, generation of the travel control signal, and control of the actuators in a predetermined cycle. With the system 50v in this example, it is possible to cause the vehicle 100v to travel by autonomous control of the vehicle 100v without remotely controlling the vehicle 100v by the server 200.

### YY: Other Travel Control Examples

(YY1) In the above examples, the sensor 300 is a camera. On the other hand, the sensor 300 may not be a camera, and may instead be, for example, Light Detection And Ranging (LiDAR). In this case, the result of the detection output from the sensor 300 may be three dimensional point cloud data indicating the vehicle 100. In this case, the server 200 and the vehicle 100 may acquire the vehicle position information by template matching that uses three dimensional point cloud data indicating the result of the detection and reference point cloud data that is prepared in advance.

(YY2) In the travel control example 1, the server 200 executes processing from the acquisition of the vehicle position information to the generation of the travel control signal. On the other hand, the vehicle 100 may perform at least a part of the processing from the acquisition of the vehicle position information to the generation of the travel control signal. For example, the following forms from (1) to (3) may be employed.
(1) The server 200 may acquire vehicle position information, determine the target position that the vehicle 100 should go next, and generate a route from the current position of the vehicle 100 indicated in the acquired vehicle position information to the target position. The server 200 may generate a route to a target position which is between the current position and the target position or may generate a route to the target position. The server 200 may transmit the generated route to the vehicle 100. The vehicle 100 may generate the travel control signal in such a way that the vehicle 100 travels along the route received from the server 200 and control the actuators 120 using the generated travel control signal.
(2) The server 200 may acquire vehicle position information and transmit the acquired vehicle position information to the vehicle 100. The vehicle 100 may determine the target position that the vehicle 100 should go next, generate a route from the current position of the vehicle 100 indicated in the received vehicle position information to the target position, generate a travel control signal in such a way that the vehicle 100 travels along the generated route, and control the actuators 120 using the generated travel control signal.
(3) In the forms of the above (1) and (2), an internal sensor may be mounted on the vehicle 100, and a result of detection output from the internal sensor may be used in at least one of the generation of the route or the generation of the travel control signal. The internal sensor is a sensor mounted on the vehicle 100. The internal sensor may include, for example, a sensor that detects a motion state of the vehicle 100, a sensor that detects an operation state of each part of the vehicle 100, and a sensor that detects an environment near the vehicle 100. Specifically, the internal sensor may include, for example, a camera, LiDAR, a millimeter wave radar, an ultrasonic sensor, a GPS sensor, an acceleration sensor, a gyro sensor or the like. For example, in the form of the above (1), the server 200 may acquire the result of the detection in the internal sensor and reflect the result of the detection in the internal sensor in the route when the route is generated. In the form of the above (1), the vehicle 100 may acquire the result of the detection in the internal sensor and reflect the result of the detection in the internal sensor in a travel control signal when the travel control signal is generated. In the form of the above (2), the vehicle 100 may acquire the result of the detection in the internal sensor, and reflect the result of the detection in the internal sensor in the route when the route is generated. In the form of the above (2), the vehicle 100 may acquire the result of the detection in the internal sensor, and reflect the result of the detection in the internal sensor in the travel control signal when the travel control signal is generated.

(YY3) In the travel control example 2, an internal sensor may be mounted on the vehicle 100v and the result of the detection output from the internal sensor may be used in at least one of the generation of the route or the generation of the travel control signal. For example, the vehicle 100v may acquire the result of the detection in the internal sensor, and reflect the result of the detection in the internal sensor in the route when the route is generated. The vehicle 100v may acquire the result of the detection in the internal sensor and reflect the result of the detection in the internal sensor in the travel control signal when the travel control signal is generated.

(YY4) In the travel control example 2, the vehicle 100v acquires the vehicle position information using the result of the detection by the sensor 300. On the other hand, an internal sensor is mounted on the vehicle 100v, and the vehicle 100v may acquire vehicle position information using a result of detection in the internal sensor, determine the target position that the vehicle 100v should go next, generate a route from the current position of the vehicle 100v indicated in the acquired vehicle position information to the target position, generate a travel control signal for traveling along the generated route, and control the actuators 120 using the generated travel control signal. In this case, the vehicle 100v may travel without using the result of the detection by the sensor 300. Note that the vehicle 100v may acquire a target arrival time or congestion information from the outside of the vehicle 100v and reflect the target arrival time or the congestion information in at least one of the route or the travel control signal. Further, all the functional configurations of the system 50v may be provided in the vehicle 100v. That is, the processing implemented by the system 50v in the present disclosure may be achieved by the vehicle 100v alone. For example, a leading vehicle 100v may transmit control instruction values to the following vehicle 100.

(YY5) In the travel control example 1, the server 200 automatically generates a travel control signal to be transmitted to the vehicle 100. On the other hand, the server 200 may generate the travel control signal to be transmitted to the vehicle 100 in accordance with an operation performed by an external operator located in the outside of the vehicle 100. For example, the external operator may operate a manipulation apparatus including a display for displaying a captured image output from the sensor 300, a steering, an accelerator pedal, and a brake pedal for remotely operating the vehicle 100, and a communication apparatus for communicating with the server 200 by wired communication or wireless communication, and the server 200 may generate a travel control signal in accordance with the operation added to the manipulation apparatus.

(YY6) In each of the above travel control examples, it is sufficient that the vehicle 100 include a configuration capable of moving by unmanned driving, and the vehicle 100 may have, for example, a form of a platform including the configurations stated below. Specifically, it is sufficient that the vehicle 100 at least include the vehicle control apparatus 110 and the actuators 120 in order to exert three functions of "run", "turn", and "stop" by unmanned driving. **In** a case where the vehicle 100 externally acquires information for unmanned driving, the vehicle 100 may further include a communication apparatus 130. That is, the vehicle 100 that can move by unmanned driving may not be provided with at least some of internal components such as a driving seat or a dashboard, at least some of the external components such as a bumper or a fender, or a body shell. **In** this case, before the vehicle 100 is shipped from the factory FC, the other components such as a body shell may be mounted on the vehicle 100, or the other components such as the body shell may be mounted on the vehicle 100 after the vehicle 100 is shipped from the factory FC in a state in which the other components such as the body shell are not mounted on the vehicle 100. Each of the components may be mounted thereon from a desired direction such as an upper side, a lower side, a front side, a rear side, a right side, or a left side of the vehicle 100, mounted thereon from the same direction, or mounted thereon from different directions. **In** terms of the form of the platform, the position may be determined as in the vehicle 100 according to the first embodiment.

(YY7) The vehicle 100 may be manufactured by combining a plurality of modules. The module means a unit formed of a plurality of components grouped according to a part or a function of the vehicle 100. For example, the platform of the vehicle 100 may be manufactured by combining a front module that forms a front part of the platform, a central module that forms a central part of the platform, and a rear module that forms a rear part of the platform with one another. Note that the number of modules that form the platform is not limited to three, and may be two or smaller or four or larger. Further, in addition to or in place of the components that form the platform, components of the vehicle 100 that form parts other than the platform may be formed in modules. Further, these modules may include any exterior components such as a bumper or a grill or any interior components such as seats and a console. Further, not only the vehicle 100 but also any form of mobile body may be manufactured by combining a plurality of modules. These modules may be manufactured, for example, by joining a plurality of components by welding, fixtures, or the like, or may be manufactured by integrally molding at least some of the components that form the module as one component by casting. A molding method of integrally forming one component, in particular, a relatively large-sized component is also called gigacasting or megacasting. For example, the above front module, central module, and rear module may be manufactured using gigacasting.

(YY8) Transporting a vehicle 100 using traveling of the vehicle 100 by unmanned driving is also referred to as "self-propelled transportation". Further, a configuration for achieving self-propelled transportation is referred to as a "vehicle remote control autonomous travel transportation system". Further, a production method for producing vehicles 100 using self-propelled transportation is also referred to as "self-propelled production". In the self-propelled production, for example, in a factory FC that manufactures the vehicles 100, a part of the transportation of the vehicle 100 is achieved by self-propelled transportation.

(YY9) In each of the above travel control examples, some or all of the functions and processing implemented in the form of software may be implemented in the form of hardware. Further, some or all of the functions and processing implemented in the form of hardware may be implemented in the form of software. For example, various types of circuits such as an integrated circuit or a discrete circuit may be used as hardware for implementing various types of functions in each of the above embodiments.

In the above travel control examples 1 and 2 described above as well, the stop control shown in Figs. 3-7, etc. can be applied. For example, the remote control unit 210 shown in Fig. 9 performs stop control by image processing. In Figs. 8-12 as well, stop control by the suspension string 32 and the control equipment 30 shown in Figs. 3 and 4 may be applied.

Further, some or all of the processing in the sensor 300, the vehicle 100, the server 200, the sensor 300, the robot 600 and the like can be implemented as a computer program. The program can be stored and provided to a computer using any type of non-transitory computer readable media. Non-transitory computer readable media include any type of tangible storage media. Examples of non-transitory computer readable media include magnetic storage media (such as floppy disks, magnetic tapes, hard disk drives, etc.), optical magnetic storage media (e.g. magneto-optical disks), CD-ROM (compact disc read only memory), CD-R (compact disc recordable), CD-R/W (compact disc rewritable), and semiconductor memories (such as mask ROM, PROM (programmable ROM), EPROM (erasable PROM), flash ROM, RAM (random access memory), etc.). The program may be provided to a computer using any type of transitory computer readable media. Examples of transitory computer readable media include electric signals, optical signals, and electromagnetic waves. Transitory computer readable media can provide the program to a computer via a wired communication line (e.g. electric wires, and optical fibers) or a wireless communication line.

## Claims

1. A vehicle manufacturing system for performing controlling of a plurality of vehicles (100) forming a platoon to travel during a manufacturing process or a transporting process, the vehicle manufacturing system comprising:
a camera (300) configured to capture an image of a traveling area where the plurality of vehicles travel and an area other than the traveling area;
a worker detection unit (252) configured to detect a worker (W) who is included in the captured image by performing image processing on the image captured by the camera; and
**characterized in that** the vehicle manufacturing system further comprises:
an area determination unit (253) configured to determine whether or not the worker is in a detection area corresponding to the traveling area, or a non-detection area, wherein the non-detection area is an area other than the detection area and which is on each of right and left sides of the traveling area,
a stop control (255) unit configured to:
analyze a plurality of frames in the captured image, and when the worker detected in the detection area in a previous frame is not detected in a subsequent frame, to determine whether the worker (W) has moved to the outside of the angle of view (V) or has moved in a blind spot of the camera created due to the presence of the vehicle (100) and no longer appears in the subsequent frame, and:
stop at least one vehicle of the plurality of vehicles when it is estimated that the worker is in the blind spot of the camera created due to the presence of the vehicle, and
not stop the at least one vehicle of the plurality of vehicles when the stop control unit determines that the worker has moved to the outside of the angle of view (V).

2. The vehicle manufacturing system according to claim 1, wherein a stop switch for stopping the vehicle (100) is provided in the non-detection area.

3. A vehicle manufacturing method for performing controlling of a plurality of vehicles (100) forming a platoon to travel during a manufacturing process or a transporting process, the vehicle manufacturing method comprising:
a step of capturing, by a camera (300), an image of a traveling area where the plurality of vehicles (100) travel and an area other than the traveling area;
a step of detecting a worker (W) who is included in the captured image by performing image processing on the image captured by the camera; and
**characterized in that** the vehicle manufacturing method further comprises:
determining, by an area determination unit (253) whether or not the worker is in a detection area corresponding to the traveling area, or a non-detection area, wherein the non-detection area is an area other than the detection area and which is on each of right and left sides of the traveling area,
a step of analyzing a plurality of frames in the captured image, and when the worker detected in the detection area in a previous frame is not detected in a subsequent frame, determining whether the worker (W) has moved to the outside of the angle of view (V) or has moved in a blind spot of the camera created due to the presence of the vehicle (100) and no longer appears in the subsequent frame, and:
stopping at least one vehicle of the plurality of vehicles when it is estimated that the worker is in the blind spot of the camera created due to the presence of the vehicle, and
not stopping the at least one vehicle of the plurality of vehicles when determining that the worker has moved to the outside of the angle of view (V).

## Patentansprüche

1. Fahrzeugfertigungssystem zur Durchführung der Steuerung einer Vielzahl von Fahrzeugen (100), die einen Konvoi bilden, um während eines Fertigungsprozesses oder eines Transportprozesses zu fahren, wobei das Fahrzeugfertigungssystem Folgendes umfasst:
eine Kamera (300), die so konfiguriert ist, dass sie ein Bild eines Fahrbereichs, in dem die Vielzahl von Fahrzeugen fährt, und eines anderen Bereichs als des Fahrbereichs aufnimmt;
eine Arbeitererkennungseinheit (252), die so konfiguriert ist, dass sie einen Arbeiter (W), der im aufgenommenen Bild enthalten ist, durch Durchführung einer Bildverarbeitung des von der Kamera aufgenommenen Bildes erkennt; und
**dadurch gekennzeichnet, dass** das Fahrzeugfertigungssystem ferner Folgendes umfasst:
eine Bereichsbestimmungseinheit (253), die so konfiguriert ist, dass sie bestimmt, ob sich der Arbeiter in einem Erkennungsbereich, der dem Fahrbereich entspricht, oder in einem Nicht-Erkennungsbereich befindet, wobei der Nicht-Erkennungsbereich ein anderer Bereich ist als der Erkennungsbereich und sich jeweils auf der rechten und linken Seite des Fahrbereichs befindet,
eine Stoppsteuereinheit (255), die konfiguriert ist zum:
Analysieren einer Vielzahl von Einzelbildern des aufgenommenen Bildes und, wenn der Arbeiter, der in einem vorherigen Einzelbild im Erkennungsbereich erkannt wurde, in einem nachfolgenden Einzelbild nicht erkannt wird, Bestimmen, ob sich der Arbeiter (W) aus dem Sichtwinkel (V) bewegt hat oder sich in einen durch das Vorhandensein des Fahrzeugs (100) entstandenen toten Winkel der Kamera bewegt hat und im nachfolgenden Einzelbild nicht mehr erscheint, und:
Anhalten von mindestens einem Fahrzeug der Vielzahl von Fahrzeugen, wenn geschätzt wird, dass sich der Arbeiter in dem durch das Vorhandensein des Fahrzeugs entstandenen toten Winkel der Kamera befindet, und
Nichtanhalten des mindestens einen Fahrzeugs der Vielzahl von Fahrzeugen, wenn die Stoppsteuereinheit bestimmt, dass sich der Arbeiter aus dem Sichtwinkel (V) bewegt hat.

2. Fahrzeugfertigungssystem nach Anspruch 1, wobei ein Stoppschalter zum Anhalten des Fahrzeugs (100) im Nicht-Erkennungsbereich vorgesehen ist.

3. Fahrzeugfertigungsverfahren zur Durchführung der Steuerung einer Vielzahl von Fahrzeugen (100), die einen Konvoi bilden, um während eines Fertigungsprozesses oder eines Transportprozesses zu fahren, wobei das Fahrzeugfertigungsverfahren Folgendes umfasst:
einen Schritt des Aufnehmens eines Bildes eines Fahrbereichs, in dem die Vielzahl von Fahrzeugen (100) fährt, sowie eines anderen Bereichs als des Fahrbereichs durch eine Kamera (300);
einen Schritt zum Erkennen eines Arbeiters (W), der in dem aufgenommenen Bild enthalten ist, durch Durchführung einer Bildverarbeitung des von der Kamera aufgenommenen Bildes; und
**dadurch gekennzeichnet, dass** das Fahrzeugfertigungsverfahren ferner Folgendes umfasst:
Bestimmen, durch eine Bereichsbestimmungseinheit (253), ob sich der Arbeiter in einem Erkennungsbereich, der dem Fahrbereich entspricht, oder in einem Nicht-Erkennungsbereich befindet, wobei der Nicht-Erkennungsbereich ein anderer Bereich als der Erkennungsbereich ist und sich jeweils auf der rechten und linken Seite des Fahrbereichs befindet,
einen Schritt zum Analysieren einer Vielzahl von Einzelbildern im aufgenommenen Bild und, wenn der Arbeiter, der in einem vorherigen Einzelbild im Erkennungsbereich erkannt wurde, in einem nachfolgenden Einzelbild nicht erkannt wird, Bestimmen, ob sich der Arbeiter (W) aus dem Sichtwinkel (V) bewegt hat oder sich in einen durch das Vorhandensein des Fahrzeugs (100) entstandenen toten Winkel der Kamera bewegt hat und im nachfolgenden Einzelbild nicht mehr erscheint, und:
Anhalten von mindestens einem Fahrzeug der Vielzahl von Fahrzeugen, wenn geschätzt wird, dass sich der Arbeiter in dem durch das Vorhandensein des Fahrzeugs entstandenen toten Winkel der Kamera befindet, und
Nichtanhalten des mindestens einen Fahrzeugs der Vielzahl von Fahrzeugen, wenn bestimmt wird, dass sich der Arbeiter aus dem Sichtwinkel (V) bewegt hat.

## Revendications

1. Système de fabrication de véhicules permettant de commander une pluralité de véhicules (100) formant un convoi afin qu'ils se déplacent lors d'un processus de fabrication ou d'un processus de transport, ledit système de fabrication de véhicules comprenant :
une caméra (300) conçue pour capturer une image d'une zone de déplacement où la pluralité de véhicules se déplacent et d'une zone autre que la zone de déplacement,
une unité de détection d'ouvrier (252) conçue pour détecter un ouvrier (W) qui figure dans l'image capturée, par réalisation d'un traitement d'image sur l'image capturée par la caméra ;
**caractérisé en ce que** le système de fabrication de véhicules comprend en outre :
une unité de détermination de zone (253) conçue pour déterminer si l'ouvrier se trouve dans une zone de détection correspondant à la zone de déplacement ou dans une zone de non-détection, ladite zone de non-détection étant une zone autre que la zone de détection et se trouvant sur chacun des côtés droit et gauche de la zone de déplacement,
une unité de commande d'arrêt (255) conçue pour :
analyser une pluralité de trames dans l'image capturée, et lorsque l'ouvrier détecté dans la zone de détection dans une trame précédente n'est pas détecté dans une trame suivante, pour déterminer si l'ouvrier (W) s'est déplacé hors de l'angle de vue (V) ou s'il s'est déplacé dans une zone masquée de la caméra créée en raison de la présence d'un véhicule (100) et qu'il n'apparaît plus dans la trame suivante, et
arrêter au moins un véhicule de la pluralité de véhicules lorsqu'il est estimé que l'ouvrier est dans la zone masquée de la caméra créée en raison de la présence d'un véhicule, et
ne pas arrêter le ou les véhicules de la pluralité de véhicules lorsque l'unité de commande d'arrêt détermine que l'ouvrier s'est déplacé hors de l'angle de vue (V).

2. Système de fabrication de véhicules selon la revendication 1, dans lequel un interrupteur d'arrêt servant à arrêter le véhicule (100) est prévu dans la zone de non-détection.

3. Procédé de fabrication de véhicules permettant de commander une pluralité de véhicules (100) formant un convoi afin qu'ils se déplacent lors d'un processus de fabrication ou d'un processus de transport, ledit procédé de fabrication de véhicules comprenant :
une étape de capture, à l'aide d'une caméra (300), d'une image de la zone de déplacement où la pluralité de véhicules (100) se déplacent et d'une zone autre que la zone de déplacement,
une étape de détection d'un ouvrier (W) qui figure dans l'image capturée, par réalisation d'un traitement d'image sur l'image capturée par la caméra ;
**caractérisé en ce que** le procédé de fabrication de véhicules comprend en outre :
la détermination, par une unité de détermination de zone (253), du fait que l'ouvrier se trouve dans une zone de détection correspondant à la zone de déplacement ou dans une zone de non-détection, ladite zone de non-détection étant une zone autre que la zone de détection et se trouvant sur chacun des côtés droit et gauche de la zone de déplacement,
une étape d'analyse d'une pluralité de trames dans l'image capturée, et lorsque l'ouvrier détecté dans la zone de détection dans une trame précédente n'est pas détecté dans une trame suivante, de détermination du fait que l'ouvrier (W) s'est déplacé hors de l'angle de vue (V) ou s'est déplacé dans une zone masquée de la caméra créée en raison de la présence d'un véhicule (100) et qu'il n'apparaît plus dans la trame suivante, et
l'arrêt d'au moins un véhicule de la pluralité de véhicules lorsqu'il est estimé que l'ouvrier est dans la zone masquée de la caméra en raison de la présence d'un véhicule, et
le non-arrêt du ou des véhicules de la pluralité de véhicules lors de la détermination du fait que l'ouvrier s'est déplacé hors de l'angle de vue (V).
